# FASCICULE DE BREVET EUROPEEN

(11) **EP 2 514 166 B1**
(45) Date de publication et mention de la délivrance du brevet: **12.02.2020**
(21) Numéro de dépôt: 10805474.3
(22) Date de dépôt: 13.12.2010
(51) Int. Cl.: H04L 29/06, H04L 29/08

(54) **ACCÈS A UN RÉSEAU DE DISTRIBUTION DE CONTENU NUMÉRIQUE**
ZUGANG ZU EINEM NETZWERK ZUR VERTEILUNG VON DIGITALEN INHALTEN
ACCESS TO A NETWORK FOR DISTRIBUTING DIGITAL CONTENT

(30) Priorité: 18.12.2009 FR 0959187
(43) Date de publication de la demande: 24.10.2012
(73) Titulaire: Orange, 75015 Paris (FR)
(72) Inventeur: FROMENTOUX, Gaël, F-22560 Ile Grande (FR); FIEAU, Frédéric, F-22700 Perros Guirec (FR)
(74) Mandataire: Plasseraud IP
(86) Numéro de dépôt international: PCT/FR2010/052698
(87) Numéro de publication internationale: WO 2011/073560

(56) Documents cités:
- US-A1- 2002 147 929
- KANGASHARJU J ET AL: "Locating Copies of Objects Using the Domain Name System", PROCEEDINGS OF THE INTERNATIONAL CACHING WORKSHOP, XX, XX, 1 janvier 1999 (1999-01-01), pages 1-12, XP002197618,

## Description

La présente invention concerne une gestion d'accès à un réseau de distribution de contenus numériques, et plus particulièrement une telle gestion d'accès basée sur l'utilisation de jetons.

Un réseau de distribution de contenus ou 'CDN' pour 'Content Delivery Network' en anglais, peut comprendre une pluralité de serveurs qui coopèrent entre eux afin de pouvoir transmettre des contenus numériques à des terminaux utilisateurs. Toutefois, un utilisateur ne peut accéder à un contenu numérique que s'il est en mesure de remplir certains critères. L'accès à un contenu numérique peut ainsi être contrôlé par exemple sur la base d'un abonnement auquel a souscrit l'utilisateur et qui lui donne accès à des contenus numériques, ou encore sur la base d'un paiement qui peut être effectué pour chaque accès à un contenu numérique.

A cet effet, l'architecture d'un tel réseau repose, d'une part, sur un sous réseau de service en charge de contrôler si un terminal utilisateur a le droit d'accéder au contenu numérique qu'il requiert et, d'autre part, sur un sous réseau de distribution de contenu numérique qui est en charge de transmettre le contenu numérique à un terminal utilisateur qui l'a requis. Dans ce type de réseaux de distribution de contenu, il est important de mettre en place des mesures de sécurité permettant de contrôler l'accès aux contenus distribués.

Ainsi, dans une telle architecture, un terminal utilisateur requiert en premier lieu un contenu numérique auprès du sous réseau de service. Puis, lorsque ce sous réseau de service décide que le terminal utilisateur a le droit d'accéder au contenu numérique requis, il répond alors à cette requête en redirigeant le terminal vers un ou plusieurs éléments du sous réseau de distribution de contenus numériques adaptés pour lui transmettre le contenu numérique requis ou serveurs de contenus numériques.

Afin de contrôler et de sécuriser la distribution de ces contenus numériques vers un terminal utilisateur, il peut être prévu que le sous réseau de service réponde au terminal utilisateur en lui indiquant :
- une adresse URL (pour 'Uniform Resource Locator' en anglais); et
- un jeton.

Puis, le terminal utilisateur utilise cette adresse URL et ce jeton pour requérir le contenu considéré auprès du ou des serveurs de contenus numériques.

Dans ces conditions, le serveur de contenu numérique ne fournit le contenu numérique requis au terminal utilisateur que si le jeton est considéré comme valide. Un tel mécanisme permet ainsi de sécuriser l'accès à un contenu numérique.

Toutefois, même si le sous réseau de distribution contrôle le jeton avant de distribuer un contenu numérique, ce mécanisme est fondé sur une mesure de sécurité qui est prise au niveau du sous réseau de service exclusivement. En effet, l'accès au contenu numérique requis repose sur un jeton qui est fourni par le réseau de service.

US 2002/0147929 A1 concerne une méthode et un système de contrôle d'accès à un fichier à travers un réseau.

Kangasharju J et al (« Locating Copies of Objects Using the Domain Name System », PROCEEDINGS OF THE INTERNATIONAL CACHING WORKSHOP, 1er janvier 1999, page 1-12, divulgue une localisation de copies d'objets en utilisant le système de noms de domaines.

La présente invention vise à améliorer la situation.

Un premier aspect de la présente invention propose un procédé de gestion de transmission d'un contenu numérique à un terminal utilisateur dans un réseau comprenant un sous réseau de service adapté pour fournir au terminal un jeton de service et un sous réseau de distribution de contenus numériques qui inclut une partie contrôle et une partie transmission, ledit jeton de service étant associé à une adresse du sous réseau de distribution ;
ledit procédé de gestion comprenant les étapes suivantes au niveau de la partie contrôle du sous réseau de distribution :
/1/ recevoir une requête d'un contenu numérique du terminal utilisateur indiquant un jeton de service;
/2/ si le jeton de service est reconnu valide, déterminer une adresse relative au sous réseau de distribution et générer un jeton de session associé à ladite adresse ; et
/3/ transmettre au terminal utilisateur un message indiquant ladite adresse et le jeton de session associé à ladite adresse.

On entend par les termes 'contenu numérique' tout type de données numériques correspondant à un contenu ou à un ensemble de contenus qui peut être transmis dans le réseau considéré sous la forme d'un flux de données. On peut notamment citer des données relatives à un document ou encore des données de type image ou de type son ou encore de type vidéo, ou de manière générale des données de type multimédia.

On entend ici par le terme 'jeton' une donnée qui permet, à un terminal qui la détient, un accès à un équipement réseau qui est en mesure de valider ce jeton. Un jeton permet donc de certifier la validité d'une requête d'accès Son utilisation permet de sécuriser l'accès à un réseau. Aucune limitation n'est attachée à la nature d'un jeton. Il est ici associé à une adresse. Il peut donc correspondre par exemple à une signature de l'adresse à laquelle il est associé ou encore à un chiffrement de cette adresse.

Dans le contexte de la présente invention, une adresse peut correspondre à une chaîne de caractères normalisés servant à identifier et à localiser des ressources consultables sur le réseau, par exemple un réseau de type Internet, et à y accéder à l'aide d'un navigateur, comme une adresse de type URL. Une adresse de type URL peut par exemple être transmise via un protocole de type HTTP (pour 'HyperText Transfer Protocol' en anglais) ou encore via une page WEB. Ici, le réseau comprend, d'une part, un sous réseau de service et, d'autre part, un sous réseau de distribution. Le sous réseau de service est adapté pour fournir au terminal un jeton de service. Aucune limitation n'est attachée à la présente invention au regard de cet aspect.

Le terminal utilisateur dispose d'un jeton de service que lui a fourni préalablement le sous réseau de service. Il peut alors requérir un contenu numérique auprès du sous réseau de distribution tout en indiquant le jeton de service. Le premier jeton, jeton de service, représente un premier niveau de sécurité à un accès au réseau de distribution de contenus numériques dans le sens où le terminal indique ce jeton de service dans sa requête en direction du sous réseau de distribution. Ainsi, le sous réseau de distribution peut contrôler à ce stade si le terminal utilisateur a bien été autorisé préalablement par le sous réseau de service à obtenir le contenu numérique requis auprès de l'adresse indiquée, car le jeton de service doit être associé à cette adresse, dans un mode de réalisation de la présente invention. A cet effet, le sous réseau de contrôle comprend une partie contrôle et une partie transmission. Suite à son autorisation par le sous réseau de service, le terminal utilisateur est redirigé sur une adresse qui correspond à la partie contrôle du sous réseau de distribution. Cette partie contrôle peut alors générer un autre jeton, dit jeton de session, si le jeton de service associé à la requête du terminal utilisateur lui apparait valide. Puis, le jeton de session est alors transmis au terminal utilisateur tout en lui indiquant une redirection d'adresse vers la partie transmission du sous réseau de distribution susceptible de pouvoir, in fine, lui transmettre le contenu numérique souhaité.

Il convient de noter que ces jetons sont générés de manière associée aux adresses respectives dans le sous réseau de distribution. Cette association d'un jeton à la prochaine adresse indiquée, et donc sélectionnée pour le terminal utilisateur, permet de garantir un niveau de sécurité contre certaines attaques qui consisteraient à capter un de ces jetons pour le réutiliser de manière frauduleuse. Ces jetons ne peuvent pas être utilisés sur n'importe quelle adresse du sous réseau de distribution puisqu'ils sont respectivement associés à des adresses du sous réseau de distribution.

Ainsi, grâce à ces dispositions, il est avantageusement possible d'appliquer deux contrôles séquentiels et liés entre eux de sorte à augmenter le niveau de sécurité d'un tel réseau de transmission de contenus numériques. En effet, il convient de noter que le premier jeton est lié à un premier contrôle au niveau service, puis le second jeton n'est généré que si le premier jeton est reconnu valide au niveau de la partie transmission du réseau. Le second jeton sert in fine à effectivement recevoir le contenu numérique au niveau du terminal utilisateur.

Le premier jeton, jeton de service, correspond donc à un contrôle effectué au niveau service et qui donne accès au sous réseau de distribution. Il s'agit ici d'une première mesure de sécurité mise en œuvre au niveau du sous réseau de service.

Puis le second jeton, jeton de session, correspond lui à un contrôle effectué au niveau transmission sur la base du premier contrôle. Il s'agit alors d'une seconde mesure de sécurité mise en œuvre au niveau du sous réseau de distribution. Il convient de noter que, avantageusement, ces deux mesures de sécurité peuvent être mises en place de manière indépendante, dès lors que les sous réseaux de service et de distribution s'accordent préalablement sur les jetons de service à utiliser. Cette indépendance de gestion peut être fort utile lorsque le sous réseau de service et le sous réseau de distribution ne sont pas gérés par le même gestionnaire. Les deux gestionnaires peuvent alors être relativement indépendants dans la définition de leurs règles de sécurité.

Il est donc ici possible de mettre en place une mesure de sécurité qui est propre au sous réseau de distribution de contenus, contrairement au système de l'art antérieur. Ainsi, le réseau de sous distribution peut par exemple mettre en place ses propres règles de distribution de clé partagée, il peut définir une taille de clé partagée qui lui est propre, ou encore un algorithme de chiffrement qui lui convient. Dans ces conditions, un changement de la mesure de sécurité du sous réseau de distribution n'entraîne pas un changement de la mesure de sécurité au niveau du sous réseau de service.

Les deux types de jetons utilisés dans ce contexte correspondent à deux types de contrôle distincts. En outre, ils sont imbriqués entre eux puisque le second jeton n'est généré que si le premier jeton est reconnu valide.

Cet enchaînement séquentiel de contrôles imbriqués permet ainsi d'accroître fortement le niveau de sécurité.

Dans ce contexte avantageux, un niveau de sécurité supérieur peut donc être mis en place de manière aisée. En effet, ici, il est non seulement prévu de fonder la sécurité d'accès au réseau sur l'utilisation d'un jeton généré au niveau service et associé à une première adresse, mais il est en outre prévu de fonder la sécurité d'accès sur l'utilisation d'un jeton supplémentaire généré, lui, au niveau transmission de contenus numériques et associé à une seconde adresse.

On peut en outre prévoir que le jeton de service et le jeton de session sont associés au terminal utilisateur. Une telle association permet d'augmenter le niveau de sécurité dans le réseau considéré. Elle permet notamment d'éviter tout rejeu du jeton considéré par tout autre terminal utilisateur que celui auquel ce jeton est associé. En effet, si le sous réseau de distribution mémorise l'association entre jeton de service et terminal utilisateur, il est alors en mesure de refuser toute transaction avec un autre terminal utilisateur sur la base du même jeton de service.

A l'étape /2/, on peut aisément prévoir de déterminer une pluralité de contenus numériques disponibles dans le sous réseau de distribution, ainsi que de générer une pluralité de jetons de session respectivement associés à ladite pluralité de contenus numériques.

On peut prévoir, à l'étape /2/, qu'une pluralité d'adresses relatives au sous réseau de distribution est déterminée et qu'une pluralité de jetons de session respectivement associés à ladite pluralité d'adresses est générée.

En prévoyant de générer ainsi un jeton par adresse, le niveau de sécurité d'accès à un contenu numérique peut alors être augmenté.

Le jeton de session peut être protégé à l'aide d'une clé de session, ladite clé de session étant partagée au niveau du sous réseau de distribution. On peut ainsi encore accroître le niveau de sécurité dans un tel système.

Il peut être avantageux également de chiffrer d'autres paramètres à l'aide de cette même clé. Ces mêmes paramètres sont alors ensuite transmis en direction du sous réseau de distribution sous leur forme chiffrée également. De cette façon, on peut encore accroître le niveau de sécurité dans ce réseau de distribution de contenus numériques.

Dans le contexte de la présente invention, on peut aisément prévoir qu'un jeton de service unique est généré par transaction avec un terminal utilisateur. Ainsi, un terminal utilisateur peut donc bénéficier d'un élément de certification unique par transaction d'achat. Cet élément de certification permet une protection accrue contre d'éventuelles attaques.

Toute requête effectuée au niveau du sous réseau de distribution peut être contrôlée sur la base du jeton de service. Dans le cas où un nouveau jeton de service est généré à chaque requête, on peut alors aisément détecter et refuser toute nouvelle demande d'un contenu numérique qui a déjà été diffusé..

L'utilisation de jeton de session permet de contrôler de manière fiable à la fois depuis lequel ou lesquels des serveurs du sous réseau de distribution la transmission du contenu requis sera effectuée et également à quel destinataire il sera transmis, quelque soit le nombre d'éléments du réseau qui interviennent dans la distribution du contenu numérique. En effet, la fiabilité de ce contrôle repose sur le mécanisme de partage des jetons de session dans le CDN.

Un deuxième aspect de la présente invention propose un procédé de gestion de transmission d'un contenu numérique à un terminal utilisateur dans un réseau comprenant un sous réseau de service et un sous réseau de distribution de contenus numériques qui inclut une partie contrôle et une partie transmission ;
ledit procédé de gestion comprenant les étapes suivantes au niveau du sous réseau de service :
/1/ recevoir une requête d'un contenu numérique du terminal utilisateur ;
/2/ décider d'autoriser le terminal utilisateur sur la base de critères de décision ;
/3/ déterminer une adresse relative au sous réseau de distribution et générer un jeton de service associé à ladite adresse ; et
/4/ transmettre au terminal utilisateur un message indiquant ladite adresse et le jeton de service associé.

Ici, le terminal utilisateur requiert un contenu numérique. Il est prévu de prendre en considération certains critères de décision afin de décider si ce terminal est autorisé à recevoir le contenu numérique requis. Aucune limitation n'est attachée au type de critère de décision à prendre en compte ici.

Ces critères peuvent correspondre à une souscription d'abonnement ou encore à un prix payé par exemple.

On peut prévoir que, lorsqu'un terminal utilisateur souhaite recevoir un contenu numérique ou un ensemble de contenus numériques. Il émet une requête correspondante à destination du sous réseau de service. Ce dernier peut alors être en charge de décider si ce terminal utilisateur est autorisé à recevoir ce contenu numérique ou non. Tout type de mécanisme d'autorisation peut alors être appliqué. On peut notamment prévoir que seuls les terminaux utilisateurs qui ont souscrit à un abonnement préalable à un service correspondant peuvent recevoir ce contenu numérique. On peut aussi envisager que le terminal utilisateur émette sa requête tout en payant un prix correspondant à un coût unitaire associé à ce contenu numérique ou à cet ensemble de contenus numériques.

Quelque soit le mécanisme mis en œuvre au niveau du sous réseau de service pour décider d'autoriser le terminal utilisateur à recevoir le contenu numérique requis, le sous réseau de service génère alors un premier jeton pour ce terminal utilisateur, ou encore jeton de service. Aucune limitation n'est attachée à la génération de ce type de jeton selon un mode de réalisation de la présente invention.

Le sous réseau de service indique alors au terminal utilisateur autorisé, à la fois une adresse relative au sous réseau de distribution et le jeton de service associé.

Dans un mode de réalisation de la présente invention, les jetons sont générés à l'aide d'une clé secrète. De manière générale, le sous réseau de service peut disposer d'une clé de service et le sous réseau de distribution peut disposer d'une clé de session. La clé de service est alors également connue du sous réseau de distribution de manière à permettre à ce sous réseau de contrôler la validité du jeton de service indiqué par un terminal utilisateur.

Ainsi, au niveau du terminal utilisateur, le jeton de service est reçu et est indiqué sous forme chiffrée à l'aide d'une clé de service qui est connue à la fois au niveau du sous réseau de service et au niveau du sous réseau de distribution ; et le jeton de session est reçu et est indiqué sous forme chiffrée à l'aide d'une clé de session qui est connue au niveau du sous réseau de distribution.

Dans un mode de réalisation de la présente invention, on peut prévoir que le sous réseau de service ne connaisse pas la clé de service et qu'il requiert le chiffrement en transmettant les données à chiffrer au sous réseau de distribution. On peut en outre prévoir que la clé de service et la clé de session soient identiques.

En partageant ainsi un jeton entre service et distribution et en utilisant plusieurs types de jetons selon un mode de réalisation de la présente invention, le niveau de sécurité pour l'accès à un contenu numérique dans un tel réseau est augmenté.

Il est donc avantageusement possible de dé-corréler une transaction d'achat de différentes transactions de transmission de contenus numériques correspondantes. On peut également ici aisément comptabiliser le nombre de sessions de transmission qui sont autorisées pour un jeton de service généré pour un terminal utilisateur donné.

Un troisième aspect de la présente invention propose un procédé de gestion de transmission d'un contenu numérique à un terminal utilisateur dans un réseau comprenant un sous réseau de service et un sous réseau de distribution de contenus numériques qui inclut une partie contrôle et une partie transmission ;
ledit procédé de gestion comprenant les étapes suivantes au niveau du terminal utilisateur :
/1/ requérir un contenu numérique auprès du sous réseau de service ;
/2/ recevoir une première adresse relative à la partie contrôle du sous réseau de distribution et un jeton de service associé à ladite première adresse;
/3/ requérir auprès de ladite première adresse le contenu numérique en indiquant le jeton de service associé à ladite première adresse ;
/4/ recevoir une seconde adresse, relative à la partie transmission du sous réseau de distribution et un jeton de session associé à ladite seconde adresse ;
/5/ requérir auprès de ladite seconde adresse le contenu numérique en indiquant le jeton de session associé à ladite seconde adresse ; et
/6/ recevoir le contenu numérique.

Le jeton de service peut être reçu et indiqué sous forme chiffrée à l'aide d'une clé de service qui est connue à la fois au niveau du sous réseau de service et au niveau du sous réseau de distribution ; et dans ce cas là, le jeton de session est reçu et est indiqué sous forme chiffrée à l'aide d'une clé de session qui est connue au niveau du sous réseau de distribution.

Dans un mode de réalisation, à l'étape /4/, une pluralité d'adresses relatives à la partie transmission du sous réseau de distribution et une pluralité de jetons de session respectivement associés à ladite pluralité d'adresses sont reçus ; et
à l'étape /5/, on requiert auprès de ladite pluralité d'adresses le contenu numérique en indiquant respectivement les jetons de session associés à ladite pluralité d'adresses.

En prévoyant de générer ainsi un jeton par adresse, le niveau de sécurité d'accès à un contenu numérique peut alors être augmenté.

On peut aussi prévoir que le jeton de service et le jeton de session sont en outre associés à une transaction correspondant à l'étape /1/ et à une transaction correspondant à l'étape /5/. Une telle association permet d'augmenter encore le niveau de sécurité dans le réseau considéré. Elle permet notamment d'éviter tout rejeu effectué par un même terminal utilisateur. Il suffit de stocker au sein du réseau de gestion de contenus numériques l'association entre un jeton et la transaction à laquelle il correspond afin de pouvoir détecter efficacement une situation de rejeu de jeton, que le jeton soit rejoué par le terminal utilisateur considéré ou encore par un autre terminal utilisateur. A cet effet, on peut prévoir d'associer le jeton considéré avec un identifiant de la transaction relative à la requête en cours, soit auprès du sous réseau de service à l'étape /1/ soit auprès de la partie contrôle du sous réseau de distribution à l'étape /5/. Il suffit de mémoriser par exemple un identifiant de la transaction qui correspond à l'étape /1/ en association avec le jeton de service et un identifiant de la transaction qui correspond à l'étape /2/ en association avec le jeton de session.

On peut aussi prévoir que le jeton de service et le jeton de session sont en outre associés à une transaction correspondant à l'étape /1/ pour l'achat d'un ensemble de contenus numériques. On peut également prévoir que le jeton de service est en outre associé à un ensemble de jetons de session pour un ensemble de transactions correspondant à l'étape /5/. Une telle association permet non seulement d'augmenter encore le niveau de sécurité mais de plus d'avoir pour une seule transaction à l'étape /1/, plusieurs transactions et donc plusieurs livraisons correspondent à cet ensemble de contenus associé à l'étape /5/ dans le réseau considéré. Elle permet notamment d'éviter une relation bijective entre le jeton de service et le jeton de session. De plus, cela permet d'optimiser les ressources du sous-réseau de distribution de contenu car le contrôleur du sous-réseau de distribution peut sélectionner plusieurs sous-contrôleurs pour la distribution du contenu numérique et générer un jeton de session par sous-contrôleur sélectionné.

Ces associations peuvent être mémorisées dans une base de données partagée entre les différents éléments du réseau. Elles peuvent aussi être stockées directement sous la forme de fichier en local et de manière partagée dans le réseau.

Un quatrième aspect de la présente invention propose un contrôleur d'un sous réseau de distribution comprenant des moyens adaptés pour la mise en oeuvre d'un procédé selon le premier aspect de la présente invention.

Un cinquième aspect de la présente invention propose un sous réseau de service comprenant des moyens adaptés pour la mise en œuvre d'un procédé selon le deuxième aspect de la présente invention.

Un sixième aspect de la présente invention propose un réseau comprenant un terminal utilisateur, un sous réseau de service selon le cinquième aspect de la présente invention, un contrôleur selon le quatrième aspect de la présente invention et une partie transmission agencée pour contrôler une validité du jeton de session.

Un septième, huitième et neuvième aspect de la présente invention propose un programme d'ordinateur comportant des instructions pour la mise en œuvre du procédé selon respectivement le premier, le deuxième et le troisième aspect de la présente invention, lorsque ce programme est exécuté par un processeur.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre une architecture générale adaptée pour la mise en œuvre d'un procédé de gestion de transmission de contenus numériques selon un mode de réalisation de la présente invention ;
- la figure 2 illustre les principales étapes d'un, procédé au niveau d'un terminal utilisateur selon un mode de réalisation de la présente invention ;
- la figure 3 illustre une mise en œuvre d'un tel procédé dans un système de distribution de contenus numériques selon un mode de réalisation de la présente invention ;
- la figure 4 illustre une mise en œuvre d'un tel procédé dans un autre système de distribution de contenus numériques selon un mode de réalisation de la présente invention ; et
- la figure 5 illustre un terminal utilisateur, un sous réseau de service et un contrôleur de sous réseau de distribution selon un mode de réalisation de la présente invention.

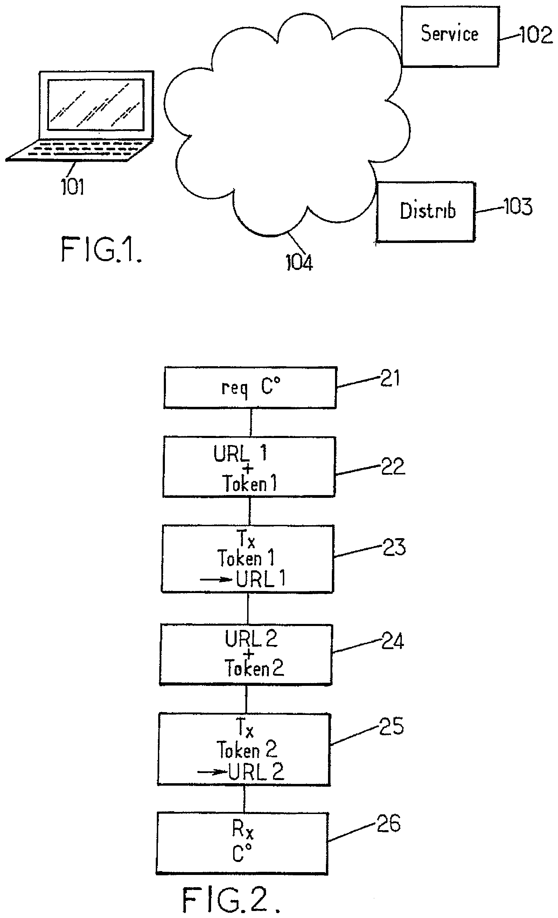

La figure 1 illustre une architecture générale adaptée pour la mise en œuvre d'un procédé de gestion de transmission de contenus numériques selon un mode de réalisation de la présente invention. Un réseau de communication 104 relie entre eux un terminal utilisateur 101, un sous réseau de service 102 et un sous réseau de distribution 103. Le terminal utilisateur 101 est adapté pour requérir un contenu numérique auprès du sous réseau de service 102 et pour le recevoir depuis le sous réseau de distribution 103. Le sous réseau de service 102 est adapté pour recevoir une requête de contenu numérique d'un terminal utilisateur et pour décider si ce terminal utilisateur est autorisé à recevoir le contenu numérique qu'il requiert. Aucune limitation n'est attachée à la présente invention au regard de cette prise de décision, ni aux types de critères de décision pris en compte par le sous réseau de service pour autoriser la transmission du contenu numérique vers ce terminal utilisateur.

Puis, lorsque le sous réseau de service décide d'autoriser cette transmission, il donne au terminal utilisateur les données nécessaires pour contacter le sous réseau de distribution de sorte à recevoir le contenu numérique selon un mode de réalisation. Cette architecture repose sur deux sous réseaux qui appliquent chacun séquentiellement et de manière imbriquée un contrôle d'accès au contenu numérique requis selon un mode de réalisation.

La figure 2 illustre les principales étapes d'un procédé de gestion de transmission d'un contenu numérique dans un réseau selon un mode de réalisation de la présente invention, au niveau d'un terminal utilisateur. L'illustration de ce procédé au niveau du terminal permet d'illustrer à la fois l'interface avec le sous réseau de service et l'interface avec le sous réseau de distribution. Au niveau d'un terminal utilisateur, à une étape 21, un contenu numérique est requis auprès du sous réseau de service 102. Puis, en réponse, si le terminal utilisateur a droit à l'accès à ce contenu numérique, il reçoit à une étape 22 une première adresse URL1 relative au sous réseau de contrôle et un jeton de service associé à la première adresse ou encore 'Token1'. Ensuite, sur la base de ces informations reçues, le terminal utilisateur peut alors requérir le contenu numérique au niveau du sous réseau de distribution. Par la suite, une adresse peut correspondre à une chaîne de caractères normalisés servant à identifier et à localiser des ressources consultables sur le réseau, par exemple un réseau de type Internet, et à y accéder à l'aide d'un navigateur, comme une adresse de type URL. Une adresse de type URL peut par exemple être transmise via un protocole de type HTTP ou encore via une page WEB.

A cet effet, à une étape 23, le terminal utilisateur se dirige vers la première adresse URL1 et fournit à cette première adresse le jeton de service associé. Plus précisément, la première adresse URL1 correspond à une entité de contrôle du sous réseau de distribution. Cette entité de contrôle, ou encore contrôleur, est en charge de contrôler la validité du jeton de service.

Puis, dans le cas où le jeton de service est reconnu valide, d'une part, elle sélectionne une entité de la partie transmission qui est en mesure de gérer la transmission du contenu numérique requis. A cette entité du sous-réseau de distribution correspond une seconde adresse URL2 dans le réseau. L'entité de contrôle génère alors un jeton de session associé à la seconde adresse URL2 pour le terminal utilisateur, ou encore 'Token2'. L'entité du sous réseau de transmission sélectionnée est ensuite indiquée au terminal utilisateur par la seconde adresse URL2, en association au jeton de session généré 'Token2'.

Ainsi, à une étape 24, le terminal reçoit cette seconde adresse URL2 relative au sous réseau de distribution de contenus numériques et le jeton de session associé.

Puis, à une étape 25, le terminal utilisateur peut alors requérir auprès de la seconde adresse le contenu numérique en indiquant le jeton de session associé. Ainsi, le terminal utilisateur fournit à cette seconde adresse le jeton de session. Si le jeton de session est reconnu valide, alors le terminal utilisateur peut recevoir le contenu numérique requis à une étape 26.

Il est prévu de préférence de disposer d'une clé de service pour chiffrer le jeton de service au niveau du sous réseau de service et pour le contrôler au niveau d'un contrôleur du sous réseau de distribution. Ainsi, la clé de service est partagée par le sous réseau de service et le sous réseau de distribution. Toutefois, il est possible aisément de prévoir que la clé de service est connue au niveau du sous réseau de distribution sans être connue au niveau du sous réseau de service. Dans ce cas, les informations à chiffrer au niveau du sous réseau de service sont alors transmises au sous réseau de distribution pour y être chiffrées puis sont retransmises au sous réseau de service sous une forme chiffrée.

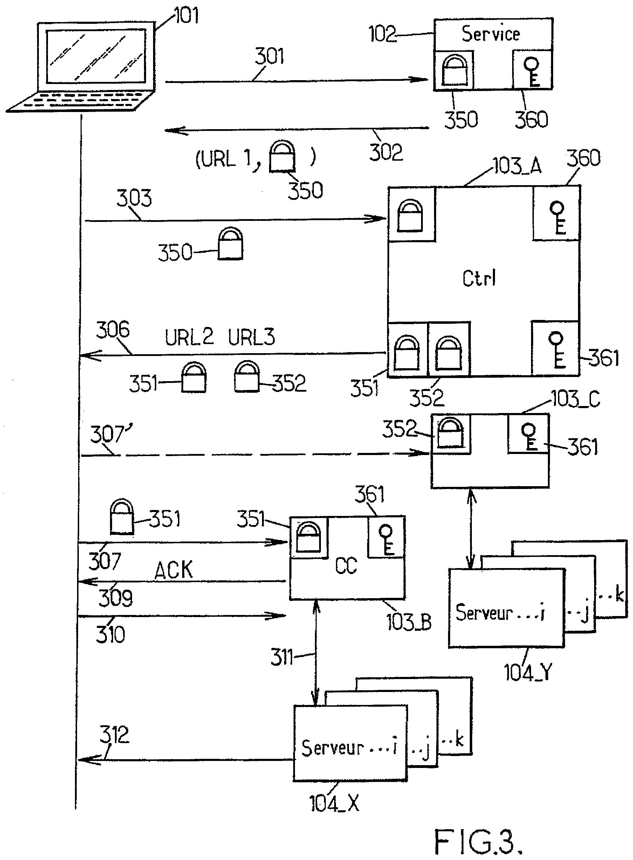

La figure 3 illustre une architecture de réseau de distribution de contenu numérique selon un mode de réalisation de la présente invention.

Un réseau de distribution de contenu numérique peut donc comprendre un sous réseau de service 102 et un sous réseau de distribution 103. Le sous réseau de service 102 peut comprendre une pluralité de plateformes de service adaptées pour générer des jetons de service à l'aide de clés de service, comme une clé de service 360.

Le sous réseau de distribution 103 comprend ici un contrôleur 103-A qui est adapté pour générer des jetons de session à l'aide d'une clé de session 361. Il dispose également de la clé de service 360 qui lui permet de contrôler la validité d'un jeton de service reçu depuis un terminal utilisateur lorsque ce dernier lui fait une requête de contenus numériques.

Puis, le sous réseau de distribution 103 peut en outre comprendre plusieurs groupes de serveurs comme un groupe de serveurs 104-X i à k et un groupe de serveurs 104-Y i à k. Ces groupes de serveurs sont contrôlés respectivement par des sous contrôleurs 103-B et 103-C (ou encore 'Cluster Controller' en anglais).

Dans un mode de réalisation de la présente invention, la clé de session 361 est partagée au niveau de toutes les entités comprises dans le sous réseau de distribution 103. Ainsi, quelque soit l'entité ou les entités du sous réseau de distribution qui sont impliquées dans la transmission du contenu numérique requis par le terminal, elles sont en mesure de contrôler éventuellement le jeton de session utilisé sous forme chiffrée pour en détecter sa validité.

On peut également aisément prévoir de gérer une clé de sessions par entité ou pour un quelconque groupe d'entité du sous réseau de distribution.

La figure 3 illustre des échanges de messages selon un mode de réalisation de la présente invention. Le terminal utilisateur 101 souhaite recevoir un contenu numérique ou un ensemble de contenus numériques. Il émet à cet effet une requête 301 à destination du sous réseau de service 102. Sur réception de ce message 301, une entité de service du sous réseau de service contrôle si le terminal utilisateur remplit certains critères d'accès à ce contenu numérique soit par abonnement à un service lui permettant de recevoir ce contenu numérique soit encore par paiement ponctuel de ce contenu numérique, par exemple. Si au niveau service cette requête est acceptée, alors au moins une première adresse URL1 dans le sous réseau de distribution 103 est sélectionnée et un jeton de service 350 est généré à l'aide d'une clé de service 360, en association à cette première adresse.

Le jeton de service 350 est obtenu à partir d'un ensemble d'informations associées qui peut comprendre tout ou partie des éléments suivants :
- un identifiant par contenu numérique ou un identifiant d'un ensemble de contenus numériques ;
- un identifiant du sous réseau de service ;
- un identifiant de service indiquant une politique de distribution de contenus ;
- un identifiant de transaction ;
- un identifiant par terminal ;
- l'adresse d'un contrôleur 103-A du sous réseau de distribution 103.
- un identifiant par client ;
- une durée de validité du jeton.

L'identifiant du client peut être son adresse dans le réseau, par exemple une adresse de type IP, ou une adresse MAC, ou bien un identifiant unique d'organisation ou OUI, pour « Organizationnally Unique Identifier » ou bien encore un identifiant de ligne ou FARID pour « Fixed Access Remote IDentifier ».. La présence de cet identifiant du terminal permet notamment d'éviter le rejeu par un autre terminal.

L'identifiant du sous réseau de service permet à l'entité du sous réseau de distribution de déterminer quelle clé de service doit être utilisée pour vérifier le jeton de service.

L'identifiant de transaction permet d'effectuer une corrélation entre des demandes de service faites au sous réseau de service et des notifications ultérieures de livraison du contenu relatives au sous réseau de distribution.

L'adresse du contrôleur 103-A du sous réseau de distribution 103 permet de contrôler le fait que le terminal utilisateur 101 ne contacte pas des entités de réseau auxquelles il n'est pas autorisé à accéder.

De façon optionnelle, la première adresse URL1 peut également comprendre une durée de validité du jeton, ou un paramètre limitant le nombre de distributions autorisées ou « maximum number of authorized play ».

Une empreinte de cet ensemble d'informations (ou application d'une fonction de hachage « hash » à cet ensemble d'informations) peut alors être calculée par la mise en œuvre d'un algorithme déterminé. Cette empreinte peut être ensuite chiffrée à l'aide de la clé de service 360 pour obtenir le jeton de service 350. L'algorithme prédéterminé peut par exemple être un algorithme SHA-1, pour « Secure Hash Algorithm ».

En variante, il est également possible de mettre en œuvre une méthode combinant un calcul de l'empreinte à l'aide d'un algorithme cryptographique et l'utilisation d'une clé secrète, telle que HMAC pour « Hash-based Message Authentication Code ».

Cet ensemble d'informations peut également être associé à la première adresse URL1.

Le jeton de service 350 permet ainsi d'assurer que la première adresse URL1 et les informations associées n'ont pas été modifiées. Il permet également d'authentifier la provenance de cette première adresse URL1.

Puis, un message 302 est alors transmis au terminai utilisateur 101 indiquant à la fois la première adresse URL1 et le jeton de service 350 associé, ainsi qu'optionnellement les informations associées.

Sur réception de ce message 302, le terminal utilisateur se dirige alors vers la première adresse URL1 indiquée, tout en indiquant le jeton de service 350 associé via un message 303, et optionnellement les informations associées. Cette première adresse URL1 permet d'accéder à un contrôleur 103-A du sous réseau de distribution 103. Ce contrôleur 103-A est en charge de contrôler la validité du jeton de service indiqué dans le message 303 sur la base de la clé de service 360 dont il dispose également. Aucune limitation n'est attachée au contrôle de la validité d'un jeton. Ce contrôle est fonction de la nature du jeton considéré. Ainsi, par exemple, si le jeton correspond à une signature d'une adresse URL (par application d'une fonction de hachage), alors on peut envisager de générer un jeton temporaire, au niveau d'une entité du réseau, à partir des données de l'adresse, puis on le compare avec le jeton présent. Dans le cas où le jeton correspond à un chiffrement des données de l'adresse URL, on peut alors essayer d'effectuer un déchiffrement. Puis on contrôle ensuite si les données obtenues par ce déchiffrement sont des données valides.

Si le jeton de service indiqué est reconnu valide à ce niveau, alors le contrôleur sélectionne au moins une seconde adresse URL2 du sous réseau de distribution, apte à distribuer le contenu numérique demandé, et il génère en association à cette adresse URL2 un jeton de session 351 à l'aide de sa clé de session 361, qui est partagée dans le sous réseau de distribution. Lorsqu'il s'agit d'un ensemble de contenus numériques, une pluralité de contenus numériques disponibles dans le sous réseau de distribution est déterminée et une pluralité de jetons de session respectivement associés à ladite pluralité de contenus numériques est générée.

Le jeton de session 351 est obtenu à partir d'un ensemble d'informations associées qui peut comprendre tout ou partie des éléments suivants :
- un identifiant par contenu numérique ou un identifiant d'un ensemble de contenus numériques ;
- un identifiant de service indiquant une politique de distribution de contenus ;
- un identifiant de transaction ;
- un identifiant par contrôleur dans le sous réseau de distribution ;
- un identifiant par terminal ;
- un identifiant du client,
- un identifiant du sous réseau de service.
- une durée de validité du jeton

Afin d'éviter le "rejeu" des requêtes utilisateur par un tiers ou par le terminal utilisateur lui-même, on peut aisément prévoir que le sous réseau conserve pendant la durée de la session correspondant à la livraison du contenu numérique, certaines données transportées dans l'adresse URL.

Typiquement, ces données conservées peuvent être l'une au moins parmi les suivantes : l'identification de transaction, le jeton lui-même, une autre valeur "nonce" correspondant à un identifiant unique pour chaque requête de contenu numérique, et valable pendant un temps limité. L'enregistrement de tout ou partie de ces données peut être fait soit dans une base de données, partagée entre les différents éléments du réseau, soit directement sous la forme d'un fichier, stocké dans un espace disque d'un des serveurs du réseau et échangés entre les entités du réseau. Cet enregistrement peut être effectué notamment lorsque l'identifiant n'est pas déjà présent ou s'il y est requis de le modifier. Dans le cas où l'identifiant est déjà présent, le réseau peut alors refuser de traitement de la requête reçue.

Le contrôleur 103-A transmet au terminal utilisateur un message 306 indiquant à la fois cette seconde adresse URL2 et le jeton de session 351 associé. La seconde adresse URL2 peut correspondre au sous contrôleur de serveurs de contenus numériques 103-B. Ainsi, sur réception de ce message 306, le terminal utilisateur accède au sous contrôleur 103-B et lui fournit le jeton de session 351, via un message 307. Ce jeton de session 351 est alors contrôlé sur la base de la clé de session 361 partagée dans le sous réseau de distribution. Si le jeton de session est considéré comme valide alors le sous contrôleur 103-B accuse bonne réception de la requête du terminal utilisateur via un message 'ACK' 309. Suite à la réception de message 309, le terminal peut alors commander la lecture du contenu numérique en émettant une commande de type 'play' via un message 310, ou encore stopper la lecture de ce contenu par une commande de type 'stop' via un message 310.

Ces différentes actions commandées par le terminal utilisateur 101 via un message 110 sont adressées au sous contrôleur 103-B qui est en charge de relayer ces commandes sur des serveurs du groupe de serveurs dont il a la charge (serveurs 104-X i, j, k ...). Puis, selon les actions requises, le ou les serveurs 104-X transmettent le contenu numérique requis via un flux de données 312.

Les échanges ont été illustrés précédemment dans un exemple particulier où le contrôleur 103-A sélectionne un seul sous-contrôleur 103-B afin d'exposer dans un cas simple. Tel que représenté à la figure 3, le contrôleur 103-A sélectionne deux sous contrôleurs 103-B et 103-C pour la gestion de la transmission du contenu numérique requis. Il sélectionne donc à la fois l'adresse URL2 du sous contrôleur 103-B et l'adresse URL3 du sous contrôleur 103-C. Il convient alors de noter qu'il génère un jeton de session par sous-contrôleur sélectionné. En effet, le jeton de session est associé à un sous-contrôleur particulier. Cette association permet de garantir un niveau de sécurité d'accès au sein du sous réseau de distribution. Il n'est alors pas possible au terminal utilisateur d'accéder à un sous contrôleur autre que celui qui est sélectionné.

Ainsi, ici, le contrôleur 103-A génère un autre jeton de session 352 associé à une autre adresse URL3 du sous contrôleur 103-C. Le terminal utilisateur reçoit dans ce cas un message 306 comprenant un jeton de session par adresse URL. Plus précisément, ce message 306 comprend l'adresse URL2 associée au jeton de session 351 et l'autre adresse URL3 associée à l'autre jeton de session 352. Cet autre jeton de session 352 est alors fourni au cours d'un échange 307' effectué avec le sous contrôleur 103-C. Le sous contrôleur 103-C est en mesure de contrôler la validité de ce jeton de session sur la base de la clé de session 361.

Les mêmes mécanismes d'action sur le contenu numérique que ceux décrits au niveau du sous contrôleur 103-B sont applicables au niveau du sous contrôleur 103-C en relation avec le groupe de serveurs 104-Y i à k.

On comprend ainsi que le procédé est applicable à un nombre variable de sous contrôleurs, le contrôleur 103-A déterminant en fonction du contenu numérique recherché le nombre de sous contrôleurs impliqués dans la distribution de ce contenu. Chaque sous contrôleur distribue ensuite une partie du contenu.

Dans une variante, un seul jeton de session 351 peut être généré pour accéder aux sous-contrôleurs impliqués dans la distribution du contenu.

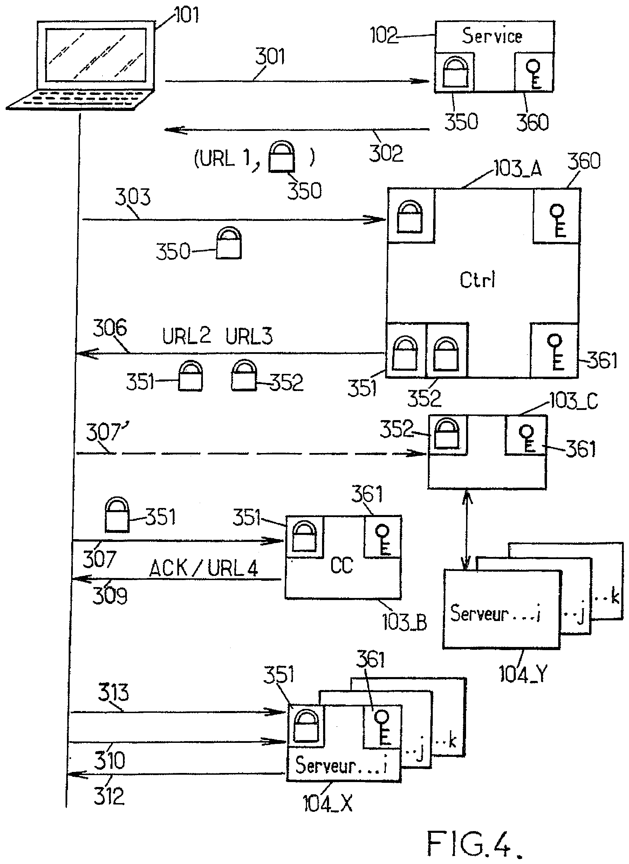

La figure 4 illustre une autre architecture de réseau de distribution de contenu numérique selon un mode de réalisation de la présente invention. Cette architecture diffère de la précédente illustrée en figure 3 en ce que les serveurs sont en mesure de recevoir et de gérer eux-mêmes les commandes d'action depuis le terminal utilisateur. Afin de maintenir un niveau de sécurité d'accès, il est ici prévu que les serveurs soient en mesure de contrôler la validité de jetons de session reçus depuis les terminaux utilisateurs. A cet effet, les serveurs disposent de la clé de session 361 partagée dans le sous réseau de distribution.

Ainsi, la figure 4 diffère de la figure 3 en ce que sur réception du message 307, le sous contrôleur 103-B contrôle la validité du jeton de session 351 et redirige le terminal utilisateur 101 vers une adresse URL4 qui correspond à celle d'un serveur du groupe de serveurs dont il a la charge, en émettant un message 309 qui indique l'adresse URL4 du serveur 104-X,i par exemple.

Ici, on peut prévoir que le serveur 104-X,i contrôle la validité de la requête du terminal sur la base du jeton de session 351 utilisé pour le contrôle au niveau du sous contrôleur 103-B. Dans ce cas (illustré), le jeton de session 351 est transmis au serveur correspondant à l'adresse URL4 via un échange 313. Ce dernier est en mesure de le contrôler sur la base de la clé de session 361. Puis, suite à ce contrôle de validité de jeton de session, le terminal utilisateur peut commander les actions sur le contenu numérique requis. Un flux de données 312 est alors émis en fonction des commandes depuis le serveur considéré vers le terminal utilisateur 101.

On peut alternativement prévoir que le sous contrôleur 103-B génère un nouveau jeton de session qu'il transmet dans le message 309 en association à l'adresse URL4. Dans ce dernier cas, le nouveau jeton de session est alors indiqué dans un premier échange d'information avec le serveurs 104-X,i considéré. Puis, ce nouveau jeton de session est alors contrôlé au niveau de ce serveur. Ensuite, le terminal utilisateur 101 peut émettre des commandes d'action sur le contenu numérique requis comme 'play' ou 'stop' par exemple. Un flux de données 312 est alors émis en fonction des commandes depuis le serveur considéré vers le terminal utilisateur 101.

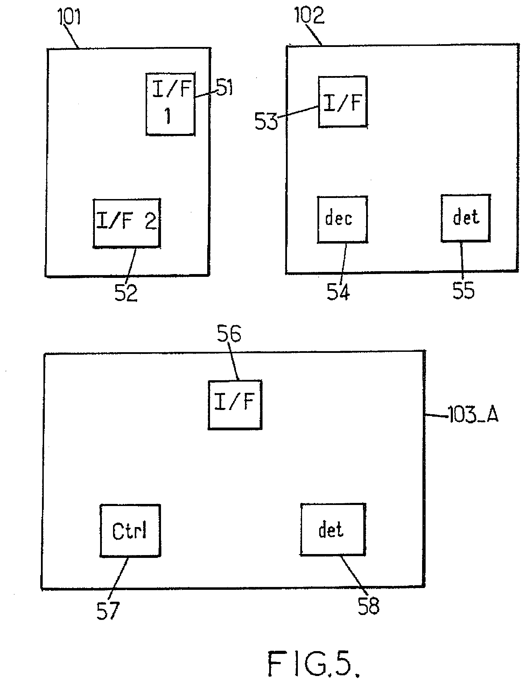

La figure 5 illustre un terminal utilisateur 101 selon un mode de réalisation de la présente invention. Il comprend :
- une première interface 51 avec le sous réseau de service adaptée pour requérir un contenu numérique et pour recevoir une première adresse relative à la partie contrôle du sous réseau de distribution et un jeton de service associé ;
- une seconde interface 52 avec le sous réseau de distribution adaptée pour :
   - requérir auprès de ladite première adresse le contenu numérique en indiquant le jeton de service associé ;
   - recevoir une seconde adresse relative à la partie transmission du sous réseau de distribution et un jeton de session associé ;
   - requérir auprès de ladite seconde adresse le contenu numérique en indiquant le jeton de session associé ; et
   - recevoir le contenu numérique.

Cette figure 5 illustre également un sous réseau de service 102 qui comprend :
- une unité d'interface 53 avec un terminal utilisateur adaptée pour :
   - recevoir une requête d'un contenu numérique du terminal utilisateur ; et
   - le cas échéant, transmettre au terminal utilisateur un message indiquant ladite adresse et le jeton de service associé ;
- une unité de décision 54 adaptée pour décider d'autoriser le terminal utilisateur sur la base de critères de décision ; et
- une unité de détermination 55 adaptée pour déterminer une adresse relative au sous réseau de distribution et générer un jeton de session associé.

La figure 5 illustre également un contrôleur 103-A d'un sous réseau de distribution 103 comprenant :
- une unité d'interface 56 adaptée pour recevoir une requête d'un contenu numérique du terminal utilisateur indiquant un jeton de service et pour, le cas échéant, transmettre au terminal utilisateur un message indiquant ladite adresse et le jeton de session associé ;
- une unité de contrôle 57 adaptée pour contrôler la validité du jeton de service ; et
- une unité de détermination 58 adaptée pour déterminer une adresse relative au sous réseau de distribution et générer un jeton de session associé.

Un sous-contrôleur 103-B d'un sous-réseau de distribution 103 comprend notamment une unité de contrôle adaptée pour contrôler la validité du jeton de session.

## Revendications

1. Procédé de gestion de transmission d'un contenu numérique à un terminal utilisateur (101) dans un réseau, **caractérisé en ce que** le réseau comprenant un sous réseau de service (102) adapté pour fournir au terminal un jeton de service et un sous réseau de distribution (103) de contenus numériques qui inclut une partie contrôle (103-A) et une partie transmission
(103-B, 104-X), ledit jeton de service étant associé à une adresse (URL1) du sous réseau de distribution ;
ledit procédé de gestion comprenant les étapes suivantes au niveau de la partie contrôle (103-A) du sous réseau de distribution
/1/ recevoir une requête (303) d'un contenu numériquedu terminal utilisateur indiquant un jeton de service (350)
/2/ si le jeton de service est reconnu valide, déterminer une adresse (URL2) relative à la partie transmission du sous réseau de distribution et générer un jeton de session associé à ladite adresse (351) ; et
/3/ transmettre au terminal utilisateur un message indiquant ladite adresse (URL2) et le jeton de session associé à ladite adresse.

2. Procédé de gestion selon la revendication 1, dans lequel à l'étape /2/, une pluralité d'adresses relatives au sous réseau de distribution est déterminée et une pluralité de jetons de session respectivement associés à
ladite pluralité d'adresses est générée.

3. Procédé de gestion selon la revendication 1, dans lequel le jeton de session (351) est protégé à l'aide d'une clé de session (361), ladite clé de session étant partagée au niveau du sous réseau de distribution.

4. Procédé de gestion de transmission d'un contenu numérique à un terminal utilisateur (101) dans un réseau, **caractérisé en ce que** le réseau comprenant un sous réseau de service (102) et un sous réseau de distribution (103) de contenus numériques qui inclut une partie contrôle (103- A) et une partie transmission (103-B, 104-X); ledit procédé de gestion comprenant les étapes suivantes au niveau du terminal utilisateur:
/1/ requérir (21) un contenu numérique auprès du sous réseau de service;
/2/ recevoir (22) une première adresse (URL1) relative à la partie
contrôle du sous réseau de distribution et un jeton de service associé (350) à ladite première adresse;
/3/ requérir (23) auprès de ladite première adresse le contenu numérique en indiquant le jeton de service associé à ladite première adresse;
/4/ recevoir (24) une seconde adresse (URL2) relative à la partie transmission du sous réseau de distribution et un jeton de session associé (351) à ladite seconde adresse ;
/5/ requérir (25) auprès de ladite seconde adresse le contenu numérique en indiquant le jeton de session associé à ladite seconde adresse ;
et
/6/ recevoir (26) le contenu numérique.

5. Procédé de gestion selon la revendication 4, dans lequel le jeton de service (350) est reçu et est indiqué sous forme chiffrée à l'aide d'une clé de service (360) qui est connue à la fois au niveau du sous réseau de service et au niveau du sous réseau de distribution et
dans lequel le jeton de session (351) est reçu et est indiqué sous forme chiffrée à l'aide d'une clé de session (361) qui est connue au niveau du sous réseau de distribution.

6. Procédé de gestion selon la revendication 4, dans lequel, à l'étape /4/, une pluralité d'adresses (URL2, URL3) relatives à la partie transmission du sous réseau de distribution et une pluralité de jetons de session respectivement associés (351, 352) à la pluralité des adresses sont reçus; et dans lequel, à l'étape /5/, on requiert auprès de ladite pluralité d'adresses le contenu numérique en indiquant respectivement les jetons de session associés à la pluralité d'adresses.

7. Contrôleur (103-A) d'une partie de contrôle (103-A) d'un sous réseau de distribution (103) pour un réseau de gestion de contenus numériques
ledit contrôleur comprenant
une unité d'interface (56) adaptée pour recevoir une requête (303) d'un contenu numérique du terminal utilisateur indiquant un jeton de service (351) et pour, le cas échéant, transmettre au
terminal utilisateur un message indiquant une adresse (URL2) et unjeton de session associé à ladite adresse
une unité de contrôle (57) adaptée pour contrôler la validité du jeton de service ; et
une unité de détermination (58) adaptée pour déterminer ladite
adresse (URL2) relative à une partie transmission du sous réseau de distribution et
générer ledit jeton de session associé (351) à ladite adresse ; et
une unité de transmission adaptée pour transmettre au terminal utilisateur un message indiquant ladite adresse (URL2) et le jeton de session associé à ladite adresse.

8. Réseau (104) de gestion de transmission d'un contenu numérique à un terminal utilisateur (101), ledit réseau comprenant un sous réseau de service (102) et un sous réseau de distribution (103) de contenus numériques qui inclut un contrôleur (103-A) selon la revendication 7 et une partie transmission (103-B, 104-X) agencée pour contrôler une validité du jeton de session ;
ledit sous-réseau de distribution comprenant ledit sous réseau de service comprenant une unité d'interface (53) avec un terminal utilisateur adaptée pour:
recevoir une requête (301) d'un contenu numérique du terminal utilisateur ; et le cas échéant, transmettre (302) au terminal utilisateur un message indiquant ladite adresse (URL1) et le jeton de service associé à ladite adresse
une unité de décision (54) adaptée pour décider d'autoriser le terminal utilisateur sur la base de critères de décision ; et
une unité de détermination (55) adaptée pour déterminer une adresse (URL 1) relative au sous réseau de distribution et générer unjeton de service (350) associé à ladite adresse.

9. Terminal utilisateur (101) adapté pour la mise en œuvre du procédé selon la revendication 4.

10. Terminal selon la revendication 9, comprenant :
- une première interface (51) avec le sous-réseau de service, adaptée pour requérir un contenu numérique et pour recevoir une première adresse relative à la partie contrôle du sous-réseau de distribution et un jeton de service associé à ladite première adresse ;
- une seconde interface (52) avec le sous-réseau de distribution, adaptée pour :
* requérir auprès de ladite première adresse le contenu numérique en indiquant le jeton de service associé à la première adresse ;
* recevoir une seconde adresse relative à la partie transmission du sous-réseau de distribution et un jeton de session associé à ladite seconde adresse ;
* requérir auprès de ladite seconde adresse le contenu numérique en indiquant le jeton de session associé à la seconde adresse ; et
* recevoir le contenu numérique.

11. Programme d'ordinateur comportant des instructions pour la mise en œuvre du procédé selon la revendication 1, lorsque ce programme est exécuté par un processeur.

12. Programme d'ordinateur comportant des instructions pour la mise en œuvre du procédé selon la revendication 4, lorsque ce programme est exécuté par un processeur.

## Patentansprüche

1. Verfahren zur Verwaltung der Übertragung eines digitalen Inhalts an ein Benutzerendgerät (101) in einem Netz, **dadurch gekennzeichnet, dass** das Netz ein Dienst-Teilnetz (102), das geeignet ist, ein Diensttoken an das Endgerät zu liefern, und ein Verteilungs-Teilnetz (103) von digitalen Inhalten enthält, das einen Kontrollteil (103-A) und einen Übertragungsteil (103-B, 104-X) umfasst, wobei das Diensttoken einer Adresse (URL1) des Verteilungs-Teilnetzes zugeordnet ist;
wobei das Verwaltungsverfahren die folgenden Schritte im Bereich des Kontrollteils (103-A) des Verteilungs-Teilnetzes enthält:
/1/ Empfang einer Anforderung (303) eines digitalen Inhalts vom Benutzerendgerät, die ein Diensttoken (350) angibt;
/2/wenn das Diensttoken als gültig erkannt wird, Bestimmung einer Adresse (URL2) bezüglich des Übertragungsteils des Verteilungs-Teilnetzes und Erzeugung eines Sitzungstokens (351), das der Adresse zugeordnet ist; und
/3/Übertragung einer Nachricht an das Benutzerendgerät, die die Adresse (URL2) und das der Adresse zugeordnete Sitzungstoken angibt.

2. Verwaltungsverfahren nach Anspruch 1, wobei im Schritt /2/ eine Vielzahl von Adressen bezüglich des Verteilungs-Teilnetzes bestimmt wird und eine Vielzahl von Sitzungstoken, die je der Vielzahl von Adressen zugeordnet sind, generiert wird.

3. Verwaltungsverfahren nach Anspruch 1, wobei das Sitzungstoken (351) mit Hilfe eines Sitzungsschlüssels (361) geschützt wird, wobei der Sitzungsschlüssel im Bereich des Verteilungs-Teilnetzes geteilt wird.

4. Verfahren zur Verwaltung der Übertragung eines digitalen Inhalts an ein Benutzerendgerät (101) in einem Netz, **dadurch gekennzeichnet, dass** das Netz ein Dienst-Teilnetz (102) und ein Verteilungs-Teilnetz (103) von digitalen Inhalten enthält, das einen Kontrollteil (103-A) und einen Übertragungsteil (103-B, 104-X) umfasst; wobei das Verwaltungsverfahren die folgenden Schritte im Bereich des Benutzerendgeräts enthält:
/1/ Anfordern (21) eines digitalen Inhalts beim Dienst-Teilnetz;
/2/Empfang (22) einer ersten Adresse (URL1) bezüglich des Kontrollteils des Verteilungs-Teilnetzes und eines der ersten Adresse zugeordneten Diensttokens (350);
/3/Anforderung (23) des digitalen Inhalts bei der ersten Adresse unter Angabe des der ersten Adresse zugeordneten Diensttokens;
/4/Empfang (24) einer zweiten Adresse (URL2) bezüglich des Übertragungsteils des Verteilungs-Teilnetzes und eines der zweiten Adresse zugeordneten Sitzungstokens (351);
/5/Anforderung (25) des digitalen Inhalts bei der zweiten Adresse unter Angabe des der zweiten Adresse zugeordneten Sitzungstokens; und
/6/Empfang (26) des digitalen Inhalts.

5. Verwaltungsverfahren nach Anspruch 4, wobei das Diensttoken (350) empfangen und mit Hilfe eines Dienstschlüssels (360) in verschlüsselter Form angegeben wird, der sowohl im Bereich des Dienst-Teilnetzes als auch im Bereich des Verteilungs-Teilnetzes bekannt ist; und
wobei das Sitzungstoken (351) empfangen und mit Hilfe eines Sitzungsschlüssels (361) in verschlüsselter Form angegeben wird, der im Bereich des Verteilungs-Teilnetzes bekannt ist.

6. Verwaltungsverfahren nach Anspruch 4, wobei im Schritt /4/ eine Vielzahl von Adressen (URL2, URL3) bezüglich des Übertragungsteils des Verteilungs-Teilnetzes und eine Vielzahl von je der Vielzahl von Adressen zugeordneten Sitzungstoken (351, 352) empfangen werden; und wobei im Schritt /5/ bei der Vielzahl von Adressen der digitale Inhalt angefordert wird, indem jeweils die der Vielzahl von Adressen zugeordneten Sitzungstoken angegeben werden.

7. Kontroller (103-A) eines Kontrollteils (103-A) eines Verteilungs-Teilnetzes (103) für ein Netz zur Verwaltung von digitalen Inhalten, wobei der Kontroller enthält:
eine Schnittstelleneinheit (56), die geeignet ist, eine Anforderung (303) eines digitalen Inhalts vom Benutzerendgerät zu empfangen, die ein Diensttoken (351) angibt, und um ggf. an das Benutzerendgerät eine Nachricht zu übertragen, die eine Adresse (URL2) und ein der Adresse zugeordnetes Sitzungstoken angibt;
eine Kontrolleinheit (57), die geeignet ist, die Gültigkeit des Diensttokens zu kontrollieren; und
eine Bestimmungseinheit (58), die geeignet ist, die Adresse (URL2) bezüglich eines Übertragungsteils des Verteilungs-Teilnetzes zu bestimmen und das der Adresse zugeordnete Sitzungstoken (351) zu generieren; und
eine Übertragungseinheit, die geeignet ist, an das Benutzerendgerät eine Nachricht zu übertragen, die die Adresse (URL2) und das der Adresse zugeordnete Sitzungstoken angibt.

8. Netz (104) zur Verwaltung der Übertragung eines digitalen Inhalts an ein Benutzerendgerät (101), wobei das Netz ein Dienst-Teilnetz (102) und ein Verteilungs-Teilnetz (103) digitaler Inhalte enthält, das einen Kontroller (103-A) nach Anspruch 7 und einen Übertragungsteil (103-B, 104-X) umfasst, der eingerichtet ist, um eine Gültigkeit des Sitzungstokens zu kontrollieren; wobei das Verteilungs-Teilnetz das Dienst-Teilnetz enthält, das enthält:
eine Schnittstelleneinheit (53) mit einem Benutzerendgerät, die geeignet ist, um:
eine Anforderung (301) eines digitalen Inhalts vom Benutzerendgerät zu empfangen; und gegebenenfalls an das Benutzerendgerät eine Nachricht zu übertragen (302), die die Adresse (URL1) und das der Adresse zugeordnete Diensttoken angibt;
eine Entscheidungseinheit (54), die geeignet ist, zu entscheiden, das Benutzerendgerät auf der Basis von Entscheidungskriterien zu berechtigen; und
eine Bestimmungseinheit (55), die geeignet ist, eine Adresse (URL1) bezüglich des Verteilungs-Teilnetzes zu bestimmen und ein der Adresse zugeordnetes Diensttoken (350) zu generieren.

9. Benutzerendgerät (101), das zur Durchführung des Verfahrens nach Anspruch 4 geeignet ist.

10. Endgerät nach Anspruch 9, das enthält:
- eine erste Schnittstelle (51) mit dem Dienst-Teilnetz, die geeignet ist, einen digitalen Inhalt anzufordern und eine erste Adresse bezüglich des Kontrollteils des Verteilungs-Teilnetzes und ein der ersten Adresse zugeordnetes Diensttoken zu empfangen;
- eine zweite Schnittstelle (52) mit dem Verteilungs-Teilnetz, die geeignet ist:
* den digitalen Inhalt unter Angabe des der ersten Adresse zugeordneten Diensttokens bei der ersten Adresse anzufordern;
* eine zweite Adresse bezüglich des Übertragungsteils des Verteilungs-Teilnetzes und ein der zweiten Adresse zugeordnetes Sitzungstoken zu empfangen;
* den digitalen Inhalt bei der zweiten Adresse unter Angabe des der zweiten Adresse zugeordneten Sitzungstokens anzufordern; und
* den digitalen Inhalt zu empfangen.

11. Computerprogramm, das Anweisungen zur Durchführung des Verfahrens nach Anspruch 1 aufweist, wenn dieses Programm von einem Prozessor ausgeführt wird.

12. Computerprogramm, das Anweisungen zur Durchführung des Verfahrens nach Anspruch 4 aufweist, wenn dieses Programm von einem Prozessor ausgeführt wird.

## Claims

1. Method of management of transmission of a digital content to a user terminal (101) in a network, **characterized in that** the network comprising a service sub-network (102) adapted to provide to the terminal a service token and a digital contents distribution sub-network (103) which includes a control part (103-A) and a transmission part (103-B, 104-X), said service token being associated with an address (URL1) of the distribution sub-network; said method of management comprising the following steps at the level of the control part (103-A) of the distribution sub-network:
/1/ receive a request (303) for a digital content of the user terminal indicating a service token (350);
/2/ if the service token is recognized valid, determine an address (URL2) relating to the transmission part of the distribution sub-network and generate a session token associated with said address (351); and
/3/ transmit to the user terminal a message indicating said address (URL2) and the session token associated with said address.

2. Method of management according to Claim 1, in which in step /2/, a plurality of addresses relating to the distribution sub-network is determined and a plurality of session tokens respectively associated with said plurality of addresses is generated.

3. Method of management according to Claim 1, in which the session token (351) is protected with the aid of a session key (361), said session key being shared at the level of the distribution sub-network.

4. Method of management of transmission of a digital content to a user terminal (101) in a network, **characterized in that** the network comprising a service sub-network (102) and a digital contents distribution sub-network (103) which includes a control part (103-A) and a transmission part (103-B, 104-X);
said method of management comprising the following steps at the level of the user terminal:
/1/ request (21) a digital content from the service sub-network;
/2/ receive (22) a first address (URL1) relating to the control part of the distribution sub-network and a service token associated (350) with said first address;
/3/ request (23) from said first address the digital content by indicating the service token associated with said first address;
/4/ receive (24) a second address (URL2) relating to the transmission part of the distribution sub-network and a session token associated (351) with said second address;
/5/ request (25) from said second address the digital content by indicating the session token associated with said second address; and
/6/ receive (26) the digital content.

5. Method of management according to Claim 4, in which the service token (350) is received and is indicated in a form enciphered with the aid of a service key (360) which is known both at the level of the service sub-network and at the level of the distribution sub-network; and
in which the session token (351) is received and is indicated in a form enciphered with the aid of a session key (361) which is known at the level of the distribution sub-network.

6. Method of management according to Claim 4, in which, in step /4/, a plurality of addresses (URL2, URL3) relating to the transmission part of the distribution sub-network and a plurality of session tokens respectively associated (351, 352) with the plurality of the addresses are received; and in which, in step /5/, the digital content is requested from said plurality of addresses by indicating respectively the session tokens associated with the plurality of addresses.

7. Controller (103-A) of a control part (103-A) of a distribution sub-network (103) for a digital contents management network
said controller comprising:
an interface unit (56) adapted to receive a request (303) for a digital content of the user terminal indicating a service token (351) and to, if relevant, transmit to the user terminal a message indicating an address (URL2) and a session token associated with said address;
a control unit (57) adapted to control the validity of the service token; and
a determination unit (58) adapted to determine said address (URL2) relating to a transmission part of the distribution sub-network and
generate said session token associated (351) with said address; and a transmission unit adapted to transmit to the user terminal a message indicating said address (URL2) and the session token associated with said address.

8. Network (104) for management of transmission of a digital content to a user terminal (101), said network comprising a service sub-network (102) and a digital contents distribution sub-network (103) which includes a controller (103-A) according to Claim 7 and a transmission part (103-B, 104-X) which is designed to control a validity of the session token;
said distribution sub-network comprising said service sub-network comprising:
an interface unit (53) for interfacing with a user terminal, adapted to:
receive a request (301) for a digital content of the user terminal; and if appropriate
transmit (302) to the user terminal a message indicating said address (URL1) and the service token associated with said address;
a decision unit (54) adapted to decide to authorize the user terminal on the basis of decision criteria; and
a determination unit (55) adapted to determine an address (URL1) relating to the distribution sub-network and generate a service token (350) associated with said address.

9. User terminal (101) adapted for the implementation of the method according to Claim 4.

10. Terminal according to Claim 9, comprising:
- a first interface (51) for interfacing with the service sub-network, adapted to request a digital content and to receive a first address relating to the control part of the distribution sub-network and a service token associated with said first address;
- a second interface (52) for interfacing with the distribution sub-network adapted to:
• request from said first address the digital content by indicating the service token associated with the first address;
• receive a second address relating to the transmission part of the distribution sub-network and a session token associated with said second address;
• request from said second address the digital content by indicating the session token associated with the second address; and
• receive the digital content.

11. Computer program comprising instructions for the implementation of the method according to Claim 1, when this program is executed by a processor.

12. Computer program comprising instructions for the implementation of the method according to Claim 4, when this program is executed by a processor.
